# NEUE EUROPÄISCHE PATENTSCHRIFT

(11) **EP 0 657 015 B2**
(45) Veröffentlichungstag und Bekanntmachung des Hinweises auf die Entscheidung über den Einspruch: **04.08.1999**
(45) Hinweis auf die Patenterteilung: 20.03.1996
(21) Anmeldenummer: 93918944.5
(22) Anmeldetag: 06.09.1993
(51) Int. Cl.: F24H 8/00

(54) **SCHORNSTEINFUSS**
CHIMNEY BASE
EMBASE DE CHEMINEE

(30) Priorität: 04.09.1992 DE 4229576; 14.12.1992 DE 9216987 U
(43) Veröffentlichungstag der Anmeldung: 14.06.1995
(73) Patentinhaber: BRAAS GMBH, 61440 Oberursel (DE)
(72) Erfinder: BOKELMANN, Horst, D-85757 Karlsfeld (DE); WENGENROTH, Ulrich, D-81249 München (DE)
(74) Vertreter: Brüning, Rolf, Dr.rer.nat.
(86) Internationale Anmeldenummer: DE9300807
(87) Internationale Veröffentlichungsnummer: WO9405954

(56) Entgegenhaltungen:
- EP-A- 0 473 982
- EP-B- 0 353 528
- DE-A- 3 710 542
- DE-A- 3 711 313
- DE-U- 8 420 443
- DE-U- 8 424 615
- DE-U- 8 633 052
- DE-U- 8 810 438
- FR-A- 2 114 145
- GB-A- 999 512
- NL-A- 8 702 107
- US-A- 2 438 411
- Prospektblatt TECHNAFLON, Zulassungsnummer Z-7.1.503, Firma INTEC MINGER AG, Landschlacht (CH)
- Institut für Bautechnik Berlin, Zulassungsbescheid vom 15.03.91 für Firma TONA, Mechernich, Zulassungsnummer Z-7.1.319

## Beschreibung

Die Erfindung betrifft einen Schornsteinfuß mit Flüssigkeitsableitung für einen Außenmantel und Innenrohr aufweisenden Schornstein, bei dem für das Innenrohr auf dem unteren Endabschnitt des Schornsteins eine Abstützung mit einem Durchlaß für Flüssigkeit vorgesehen ist und der untere Endabschnitt des Schornsteinfußes eine seitliche Öffnung zum Einbringen eines Behältnisses in den Innenraum aufweist.

Schomsteine, insbesondere Hausschornsteine, weisen ein das Abgas einer Feuerungsanlage führendes Innenrohr auf, das innerhalb eines Außenmantels angeordnet ist. Der Außenmantel ist aus einzelnen Mantelsteinen. das Innenrohr aus einzelnen Rohrabschnitten zusammengefügt. Das Innenrohr ist am Fuß des Schornsteines abgestützt und kann infolge Wärmedehnung auftretenden Längenänderungen in axialer Richtung folgen. Durch von oben her einfallenden Regen oder sich am kalten Innenrohr bildendes Kondensat sammelt sich im Bereich des Schornsteinfußes Flüssigkeit an. Zur Vermeidung einer Durchfeuchtung des Schornsteinfußes und einer sich daran anschließenden Versottung des Schornsteines muß diese Flüssigkeit abgeführt werden.

Aus der Gebrauchsmusterschrift DE-U-84 20 443 ist ein Fundamentblock für Kaltschornsteine bekannt, bei dem innerhalb des Fundamentblocks ein Leitungssystem zur Ableitung der Flüssigkeit vorgesehen ist, wobei die Flüssigkeit durch einen Siphon zu einem Stutzen an der Außenwand des Fundamentblocks geleitet wird. Üblich ist auch die Anordnung eines von der Abstützung des Innenrohres ausgehenden Röhrchens, welches den Außenmantel des Schornsteines durchsetzt. Ein Beispiel hierzu ist in "Hausladen, Handbuch der Schornsteintechnik, R.Oldenbourg-Verlag, 2. Auflage, Seite 63" dargestellt.

Aus der US-A-2,277.436 ist ein Schornstein bekannt, der zu niedrigen Kosten herstellbar und für Niedrig-Preis Hausprojekte verkauft werden kann, jedoch die Vorteile eines aus Klinkern oder Ziegeln hergestellten Schornsteins aufweisen soll. Dieser Schornstein besitzt ein mit einer Wärmeisolation umgebenes Innenrohr oder Abzugsrohr. das aus mehreren Schüssen aus emailliertem Stahl zusammengesetzt ist. Den unteren Endabschnitt des Schornsteins bildet eine Stütze. auf der eine Platte gelagert ist, auf der das Innenrohr oder Abzugsrohr ruht. Im Zentrum der Platte ist eine mit einer Bohrung verbundene Öffnung vorgesehen, an der eine Leitung angeschlossen ist, die zu einem Kanal führt. Ein Behältnis zur Aufnahme der austretenden Flüssigkeit ist bei diesem Schornstein nicht vorgesehen. Der Schornstein besitzt keinen aus Mantelsteinen gebildeten Außenmantel, vielmehr zielt die US-A-2,277,436 darauf ab. derartige Schornsteine durch ein billigeres Produkt zu ersetzen.

Aus der DE-A-37 11 313 ist ein Schornsteinfuß bekannt. bei dem der Durchlaß zur Außenwandung des Schornsteinfußes führt und das Neutralisationsgefäß vor oder neben dem Schornsteinfuß auf dem Kellerboden steht.

Bei den vorstehend beschriebenen Ausführungen ist es erforderlich, ein Behältnis zur Aufnahme der austretenden Flüssigkeit vor dem Schornsteinfuß anzuordnen. Da der Austritt der Flüssigkeit in der Höhe der Abstützung des Innenrohres erfolgt, kann entweder nur ein sehr flaches Behältnis vorgesehen werden oder es ist bauseitig ein Sockel für den Schornsteinfuß vorzusehen. In beiden Fällen steht das Behältnis ungeschützt vor dem Schornstein, so daß es leicht verschoben werden kann und die Ableitung der Flüssigkeit in das Behältnis nicht mehr gewährleistet ist. Außerdem nimmt das Behältnis zusätzlichen Platz im Kellerraum in Anspruch.

Aus der DE-U- 86 33 052 ist eine als Schlußstein bezeichnete einteilige Abstützung bekannt, die eine Mulde auf der Oberseite mit einem Ablauf auf der Unterseite aufweist. Diese Abstützung kann mit Abstand oberhalb des Bodens angebracht werden und erlaubt, daß darunter innerhalb des Schornsteinquerschnitts ein Kondensat-Auffangbehälter aufgestellt werden kann. Der Raum unterhalb der Abstützung ist seitlich zugänglich.

Aufgabe der vorliegenden Erfindung ist es, einen Schornsteinfuß zu schaffen, der als komplettes Bauteil geliefert, transportiert und versetzt werden kann, und bei dem eine betriebssichere gasdichte Ableitung der Flüssigkeit von der Austrittsöffnung in das Behältnis gewährleistet ist.

Erfindungsgemäß wird die Aufgabe mit den Merkmalen des Anspruchs 1 gelöst.

Der gesamte Schornsteinfuß ist als Fertigteil versetzbar, weil der Schornsteinfuß aus Mantelsteinen zusammengesetzt ist, die gemeinsam mit der Abstützung zu einer Einheit verbunden sind. Die Verbindung erfolgt durch Zuganker. Zum Transport und Versetzen können an den oberen Enden der Zuganker Kranösen aufgeschraubt werden. Nach dem Versetzen des Schornsteinfußes können die Kranösen gegen Verbindungselemente ausgetauscht werden, um den Schornsteinfuß mit einem aufgesetzten weiterführenden Schornsteinbauteil zugfest zu verbinden.

Bei dieser Ausführung kann der untere Endabschnitt des Schornsteinfußes in der für Mantelsteine üblichen Höhe von 323 mm ausgeführt werden. Der Außenmantel dieses unteren Endabschnitts weist lediglich drei Außenwände auf. so daß er im Querschnitt etwa U-förmig ist Somit steht der gesamte Innenraum des unteren Endabschnittes zur Aufnahme des Behältnisses zur Verfügung. Auf dem unteren Endabschnitt liegt die Abstützung für das Innenrohr auf. Auf einen zusätzlichen Sockel kann verzichtet werden.

Ist der Anfall von Flüssigkeit besonders hoch, so kann das Behältnis mit einer zu einem Abwasserkanal führenden Leitung verbunden werden. Sofern kein Bodenablauf im Keller zur Verfügung steht, kann der Schomsteinfuß auf einen eine handelsübliche Kondensatpumpe aufnehmenden Sockel aufgesetzt werden. Der Sockel kann ein üblicher Mantelstein sein, in dessen Innenraum die Kondensatpumpe Platz findet. Die Wartung der Kondensatpumpe ist von oben her nach Herausnehmen des Behältnisses möglich. Auf diese Weise kann auch eine Kondensatpumpe ohne zusätzlichen Platzbedarf untergebracht werden.

Eine Reinigung des Innenrohres des Schornsteins ist möglich, wenn oberhalb der Abstützung im Innenrohr und dem dieses umgebenden Außenmantel, vorzugsweise zweiten Mantelstein, eine Reinigungsöffnung vorgesehen ist. Die Reinigungsöffnung im Innenrohr sowie im Außenmantel kann mit einer üblichen Putztürenanordnung verschlossen werden.

Eine Belüftung des Zwischenraumes zwischen Innenrohr und Außenmantel des Schornsteins ist möglich, wenn oberhalb der Reinigungsöffnung im Außenmantel. vorzugsweise im dritten Mantelstein, eine Lüftungsöffnung vorgesehen ist. Üblicherweise ist die Lüftungsöffnung mit einem Lüftungsgitter versehen.

Eine zweckmäßige und formschöne Gestaltung des Schornsteinfußes wird erreicht, wenn die Öffnung, die Reinigungsöffnung und gegebenenfalls die Lüffungsöffnung übereinander in derselben Wand des Außenmantels angeordnet und deren Umrandungen mit einer gemeinsamen Verkleidung versehen sind.

Die Ableitung der Flüssigkeit von der Abstützung zum Behältnis erfolgt dadurch, daß die Abstützung vorzugsweise im Zentrum einen Durchlaß für Flüssigkeit aufweist, der über eine Leitung mit dem Behältnis verbunden ist.

Der Innenraum des unteren Endabschnitts und somit das freie Ende der Leitung steht mit der Außenluft in Verbindung, während im Innenrohr des Schornsteins. von dem der Durchlaß ausgeht, Unter- oder Überdruck herrschen kann. Daher ist es wichtig, daß das Ansaugen von Fremdluft bei Unterdruck bzw. der Austritt von Abgas bei Überdruck im Innenrohr vermieden wird. Hierzu dient der hydrostatische Verschluß der Leitung. Beispielsweise kann in der Leitung ein Siphon vorgesehen sein oder das Ende der Leitung kann in die Flüssigkeit im Behältnis eintauchen.

Zusätzlicher Raumbedarf außerhalb des Außenmantels ist nicht erforderlich, wenn die Leitung von der der seitlichen Öffnung gegenüberliegenden Seite her mit einem im wesentlichen waagrecht angeordneten Stutzen in das Behältnis im Bereich dessen oberen Endes einmündet und wenn der Siphon vorzugsweise an der der Öffnung gegenüberliegenden Innenwand des Innenraums angeordnet ist. Der Stutzen kann zu seiner Mündung hin leicht geneigt sein und sollte eine Abtropfnase aufweisen.

Das Behältnis kann schubladenartig in den Innenraum des unteren Endabschnitts des Schomsteinfußes eingeführt werden, wenn an den Seitenwänden des Innenraums je eine Abstützung zur Aufnahme je eines an jeder Seitenwand des Behältnisses vorzugsweise im Bereich seines oberen Endes angeordneten Vorsprungs vorgesehen ist.

Die Vorsprünge können als aus den Seitenwänden des Behältnisses herausragende Leisten, beispielsweise als Rippen oder Auskragungen, ausgebildet sein. Die Abstützungen können als U-förmige Schienen oder dergleichen ausgebildet sein. Beim Einschieben des Behältnisses in den unteren Endabschnitt des Schornsteinfußes wird dieses durch die Vorsprünge und Abstützungen seitlich und in seiner Höhenlage exakt geführt, so daß der Stutzen am Ende der Leitung in eine auf der Rückseite des Behältnisses befindliche Öffnung gleiten kann.

Das Behältnis ist besonders leicht schubladenartig in den Innenraum des unteren Endabschnitts des Schornsteinfußes einführbar, wenn das Behältnis im wesentlichen quaderförmig ausgeführt ist, oben am Behältnis eine Aussparung für den Eintritt des Stutzens vorgesehen ist und dieser oberhalb eines im Behältnis in horizontaler Richtung fixierten mit Neutralisationsmittel beschickbaren Aufnahmebehälters mündet.

Der zur Verfügung stehende Innenraum im Schornsteinfuß wird optimal genutzt, wenn Breite und Tiefe des Kondensatbehälters nur unwesentlich geringer sind als die Innenmaße des Innenraums.

Ein Verschieben des Aufnahmebehälters im Behältnis wird verhindert, da der Aufnahmebehälter in horizontaler Richtung fixiert ist. Dies kann beispielsweise dadurch erfolgen, daß auf dem Boden des Behältnisses ein Anschlag vorgesehen ist, und daß der Aufnahmebehälter an der Wandung des Behältnisses anliegt.

Vorteilhafterweise ist der Aufnahmebehälter im Behältnis nahe der Rückwand und die Aussparung am oberen Rand der Rückwand angeordnet. Der Stutzen für Kondensatzulauf kann am Schornsteinfuß befestigt sein und schwach geneigt durch die Aussparung in der Rückwand des Behältnisses in diesen hineinragen und über dem oben offenen Aufnahmebehälter enden.

Dadurch ist sichergestellt, daß nur neutralisiertes Kondensat in den übrigen Innenraum des Behältnisses eintreten kann. Somit durchströmt das Kondensat den Aufnahmebehälter von oben nach unten.

Vorteilhafterweise ist der Aufnahmebehälter zylinderförmig ausgebildet und weist einen durchbrochenen Boden auf. Der Innenraum des BehäLtnisses ist nach Lösen eines Deckels zugänglich. Der im wesentlichen frei in das Behältnis eingesetzte und vorzugsweise auf den Boden des Behältnisses gestellte Aufnahmebehälter mit verbrauchtem und/oder verschmutztem Inhalt kann leicht herausgenommen werden, um ihn zu reinigen und neu zu befüllen. Das Einbringen von Neutralisationsmittel ist besonders bequem, wenn dieses in einem den Innenmaßen des Aufnahmebehälters angepaßten Beutel verpackt ist. Der Beutel sollte aus flüssigkeitsdurchlässigem Material wie wasserfestem Filterpapier oder Vlies bestehen.

Sollte der Aufnahmebehälter verstopft sein, so kann notfalls Kondensat überlaufen, ohne sich in der Leitung zurückzustauen.

Eine Anpassung an den Säuregehalt des Kondensates ist möglich, wenn Aufnahmebehälter unterschiedlicher Größe einsetzbar sind. Somit kann jeweils ein der benötigten Menge an Neutralisationsmittel angepaßter Aufnahmebehälter eingesetzt werden. Vorteilhafterweise besitzen die verschiedenen Aufnahmebehälter jeweils die gleiche Höhe, jedoch verschiedene Querschnittsflächen. Runde Aufnahmebehälter weisen unterschiedliche Durchmesser auf.

Eine einfache Kontrolle des Inhaltes des Behältnisses ist möglich, wenn im Deckel eine öffnung vorgesehen ist, durch die wahlweise ein Füllstandanzeiger oder eine Meßsonde eingeführt werden kann.

Ein erster überlauf ist vorteilhafterweise an der Vorderwand angeordnet. Der überlauf kann besonders platzsparend ausgebildet werden. wenn er im Bereich einer vertikalen Kante des Behältnisses angeordnet ist und die vertikale Kante unterhalb des überlaufs eingezogen ist. Am überlauf kann ein senkrecht nach unten führender Schlauchstutzen angebracht sein. Der überlauf ist unterhalb der Oberkante des Behältnisses angeordnet, so daß dieser drucklos betrieben werden und auf eine Abdichtung des Deckels verzichtet werden kann.

Die Anordnung des überlaufs außerhalb des Aufnahmebehälters und unterhalb der Oberkante des Behältnisses stellt sicher, daß die größtmögliche Verweilzeit zur Neutralisation genutzt wird, denn auch nach Verlassen des Aufnahmebehälters steht der gesamte Inhalt des Behältnisses in Verbindung mit dem Neutralisationsmittel, so daß durch Diffusion ein intensiver Stoffaustausch statffinden kann.

Zum Anschluß der Kondensatpumpe kann zusätzlich ein etwas niedriger als der erste überlauf angeordneter zweiter überlauf vorgesehen sein, vorzugsweise an der Rückwand im Bereich einer anderen vertikalen Kante des Behältnisses, wobei die vertikale Kante unterhalb des zweiten überlaufs ebenfalls eingezogen ist. Im Anlieferungszustand ist der zweite überlauf verschlossen, damit kein Kondensat austreten kann, falls keine Kondensatpumpe angeschlossen wird.

In der Zeichnung ist ein bevorzugtes Ausführungsbeispiel der Erfindung dargestellt, das im folgenden näher erläutert wird.

Es zeigt
- Fig. 1: einen erfindungsgemäßen Schornsteinfuß im Längsschnitt
- Fig. 2: den Schornsteinfuß aus Fig. 1 in um 90° gedrehtem Längsschnitt.
- Fig. 3: ein Behältnis in perspektivischer Darstellung,
- Fig. 4: das Behältnis aus Fig. 3 in perspektivischer Darstellung mit einem Deckel.
- Fig 5: einen Füllstandanzeiger des Behältnisses aus Fig. 3 im Längsschnitt bei gefülltem Behältnis und
- Fig. 6: den Füllstandanzeiger aus Fig. 5 im Längsschnitt bei teilweise gefülltem Behältnis.

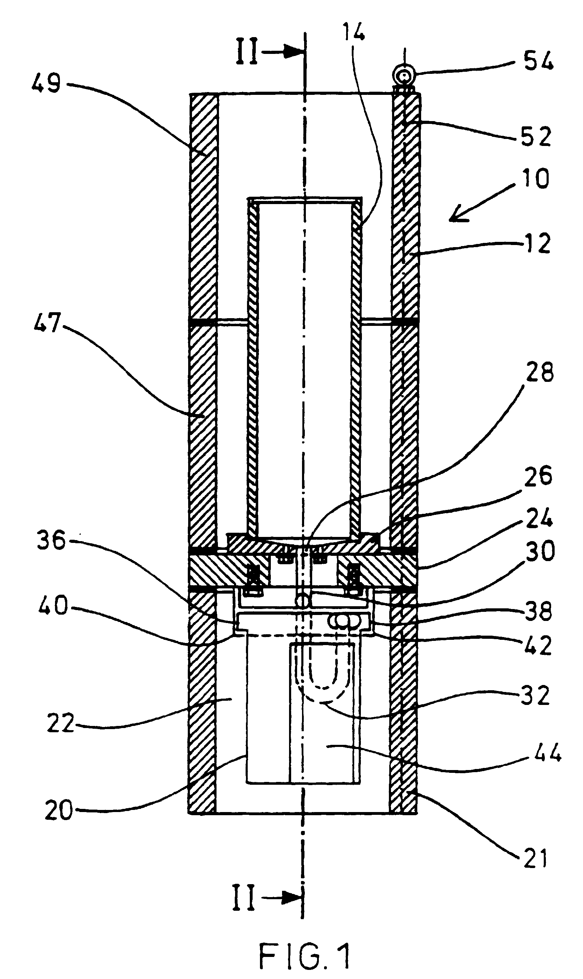

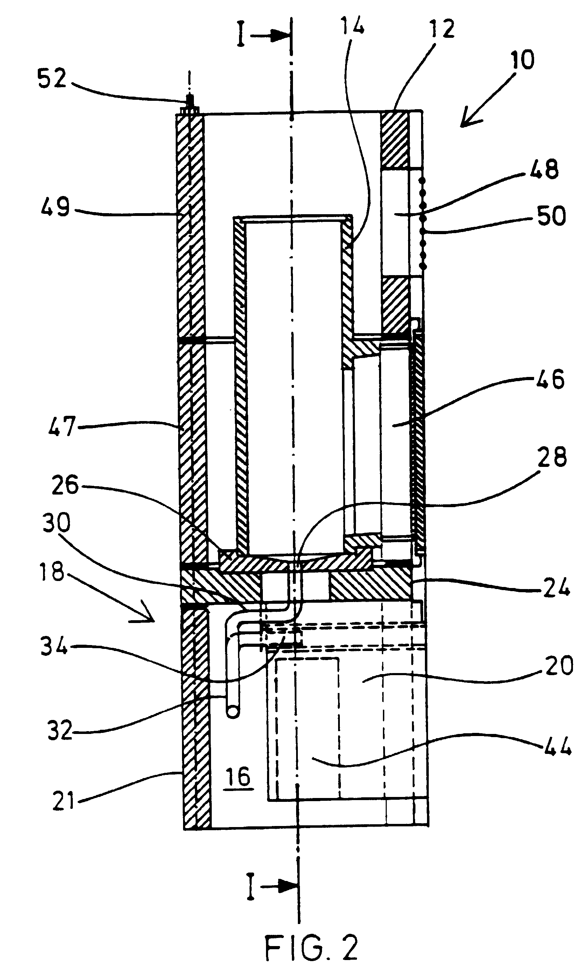

In Fig. 1 und Fig 2 ist ein Schornsteinfuß 10 mit einem Außenmantel 12 und einem Innenrohr 14 dargestellt. Im Innenraum 16 des unteren Endabschnitts 18 des Schornsteinfußes 10 ist ein Behältnis 20 zur Aufnahme von Flüssigkeit angeordnet. In einer Wand des den Außenmantel 12 bildenden Mantelsteins 21 des unteren Endabschnitts 18 ist eine öffnung 22 zum Einbringen des Behältnisses 20 vorgesehen. Auf dem Mantelstein 21 des unteren Endabschnitts 18 liegt eine Abstützung 24 für das Innenrohr 14 auf. Die Abstützung 24 ist in diesem Beispiel zweiteilig ausgeführt und trägt eine aus keramischem Werkstoff bestehende Grundplatte 26, auf der das Innenrohr 14 aufsitzt. Im Zentrum der Grundplatte 26 ist ein Durchlaß 28 für Flüssigkeit vorgesehen, welcher über eine Leitung 30 mit dem Behältnis 20 verbunden ist. In der Leitung 30 ist ein Siphon 32 angeordnet. Durchlaß 28 und Leitung 30 mit Siphon 32 sind innerhalb des Mantelsteins 21 angeordnet. Die Leitung 30 mündet von der der öffnung 22 gegenüberliegenden Seite her mit einem im wesentlichen waagrecht angeordneten Stutzen 34 in das Behältnis 20 im Bereich dessen oberen Endes. Der Stutzen 34 verläuft mit leichtem Gefälle zu seinem Ende hin.

An den Seitenwänden des Behältnisses 20 sind am oberen Ende seitliche Vorsprünge 36, 38 vorgesehen. und am oberen Ende des unteren Abschnittes 18 des Schornsteinfußes 10 sind Abstützungen 40, 42 für die Vorsprünge angeordnet. Die Abstützungen 40, 42 sind als U-förmige Schienen ausgebildet, die an der Abstützung 24 befestigt sind. Das Behältnis 20 ist als Neutralisationsgefäß ausgebildet, wobei in einen Aufnahmebehälter 44 ein geeignetes Neutralisationsmittel wie Granulate auf Kalziumbasis oder Ionenaustauscher eingebracht werden können.

Oberhalb der Abstützung 24 ist im Innenrohr 14 eine Reinigungsöffnung 46 vorgesehen, die wie auch der zugehörige zweite Mantelstein 47 mit einer üblichen Putztürenanordnung verschlossen werden kann.

Oberhalb der Reinigungsöffnung 46 ist eine Lüftungsöffnung 48 in einem dritten Mantelstein 49 im Außenmantel 12 vorgesehen, die durch ein Gitter 50 geschützt ist.

Der erste Mantelstein 21 des unteren Endabschnitts 18, die Abstützung 24, der zweite Mantelstein 47 mit der Reinigungsöffnung 46 und der dritte Mantelstein 49 mit der Lüftungsöffnung 48 sind durch Zuganker 52, 54 miteinander verbunden. In der Zeichnung ist der übersichtlichkeit wegen nur ein Zuganker 52 dargestellt. In Fig. 1 ist eine zum Transport am oberen Ende des Zugankers 52 aufgeschraubte Kranöse 54 dargestellt.

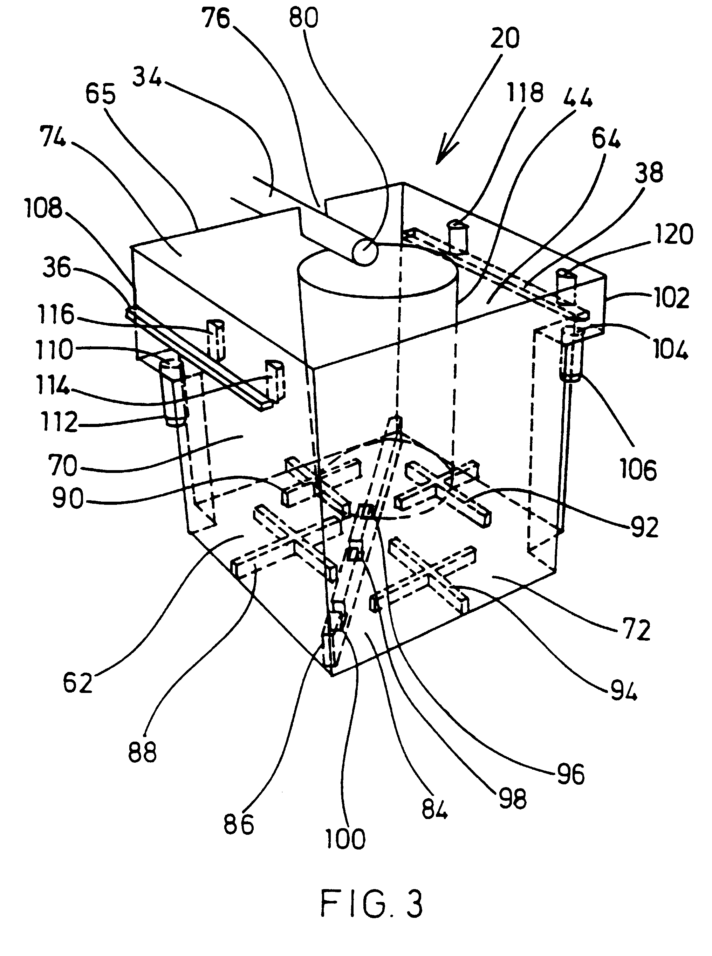

In Fig. 3 ist ein Behältnis 20 aus Polypropylen perspektivisch dargestellt. Das quaderförmige Behältnis 20 ist 250 mm hoch, 200 mm breit und 245 mm tief. An den Seitenwänden 62, 64 des Behältnisses 20 sind 35 mm unterhalb des oberen Randes 65 als auf der Außenseite etwa 5 mm herausragende Rippen ausgebildete Vorsprünge 36 bzw. 38 angeordnet, die von der Rückwand 70 ausgehen und 35 mm vor der Vorderwand 72 enden. Das Behältnis 20 ist schubladenartig in den an der Vorderseite offenen Innenraum 16 des Schornsteinfußes 10 einschiebbar, wobei die Vorsprünge 36, 38 auf Abstützungen 40, 42 des Schornsteinfußes gleiten. In der Rückwand 74 des Behältnisses 20 ist vom oberen Rand 65 ausgehend eine 31 mm tiefe U-förmige Aussparung 76 vorgesehen, durch die der schwach geneigte Stutzen 34 in den Innenraum des Behältnisses 20 hineinragt. Die Mündung 80 des Stutzens 34 ist oberhalb eines zylindrischen Aufnahmebehälters 44 für Neutralisationsmittel angeordnet.

Der Aufnahmebehälter 44 besitzt einen durchbrochenen Boden, so daß neutralisiertes Kondensat dort in den Innenraum des Behältnisses 20 austreten kann. Auf der Innenseite der Bodenwand 84 des Behältnisses 20 sind Rippen 86, 88, 90, 92, 94 zur Auflage des Aufnahmebehälters 44 angeordnet. Je nach der erforderlichen Menge des Neutralisationsmittels können Aufnahmebehälter 44 mit unterschiedlichen Durchmessern eingesetzt werden. Die Rippe 86 ist diagonal auf der Bodenwand 84 des Behältnisses 20 angeordnet und außerhalb der vom kleinsten Aufnahmebehälter 44 eingenommenen Fläche höher ausgebildet, als die übrigen Rippen 88, 90, 92 und 94. In dem höher ausgebildeten Abschnitt der Rippe 86 sind Vertiefungen 96, 98, 100 zur Lagefixierung von Aufnahmebehältem 44 mit größeren Durchmessern angeordnet.

Im Bereich der vorderen rechten Kante 102 des Behältnisses 20 ist 43 mm unterhalb des oberen Randes 65 ein erster überlauf 104 mit einem senkrecht nach unten führenden ersten Schlauchstutzen 106 angebracht. Unterhalb des ersten überlaufs 104 ist die vordere rechte Kante 102 eingezogen, so daß eine zu einem Bodenablauf führende erste Leitung angeschlossen werden kann. Im Bereich der hinteren linken Kante 108 des Behältnisses 20 ist 58 mm unterhalb des oberen Randes 65 ein zweiter überlauf 110 mit einem senkrecht nach unten führenden zweiten Schlauchstutzen 112 angebracht. Unterhalb des zweiten überlaufs 110 ist die hintere linke Kante 108 eingezogen, so daß eine zu einer Kondensatpumpe führende zweite Leitung angeschlossen werden kann. Im Anlieferungszustand des Behältnisses 20 ist der zweite Schlauchstutzen 112 verschlossen.

Nahe dem oberen Rand 65 sind im Behältnis 20 innen an den Seitenwänden 62, 64 Nocken 114, 116, 118, 120 zur Aufnahme von einen Deckel befestigenden Schrauben angeordnet.

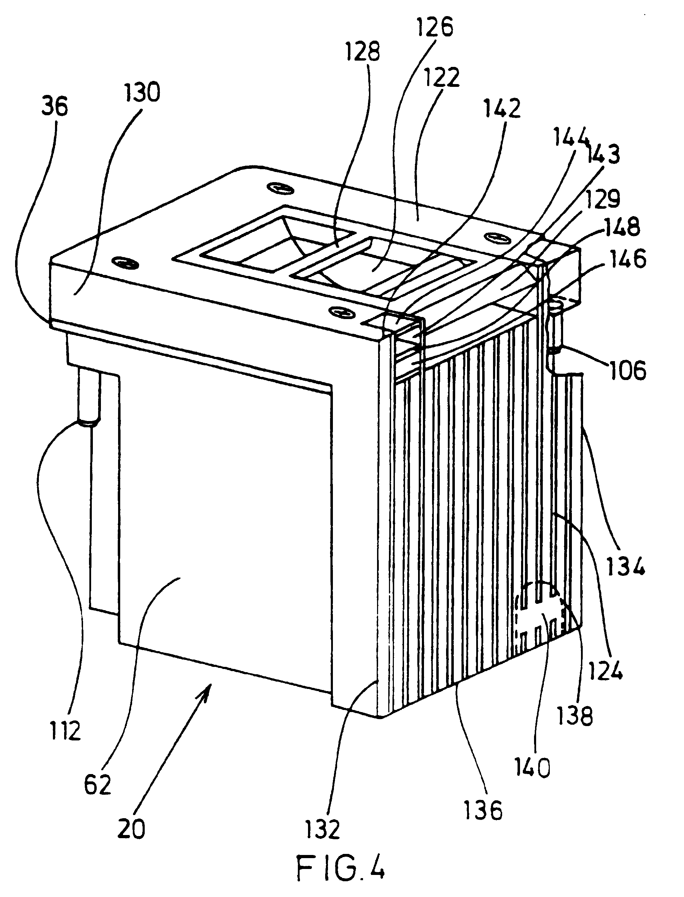

In Fig. 4 ist das Behältnis 20 aus Fig. 3 mit einem Deckel 122 aus Polypropylen perspektivisch dargestellt. Am Deckel 122 ist eine die Vorderwand 72 des Behältnisses 20 abdeckende Frontblende 124 angeformt. Auf der Oberseite des Deckels 122 ist eine sich bis zur Frontblende 124 erstreckende Griffmulde 126 mit einem in der Mitte des Deckels 122 parallel zur Frontblende 124 angeordneten ersten Griff 128 und einem an der Frontblende 124 angeordneten zweiten Griff 129 vorgesehen Vom Rand des Deckels 122 geht ein außen an der Rückwand 74 und den Seitenwänden 62, 64 des Behältnisses 20 anliegender 35 mm breiter rechtwinklig abgewinkelter Lappen 130 aus, der entlang den Seitenkanten 132, 134 der Frontblende 124 weitergeführt ist. Am unteren Rand 136 der Frontblende 124 ist nahe der rechten Seitenkante 134 ein von Kerbvertiefungen 138 auf der Rückseite begrenzter U-förmiger Abschnitt 140 vorgesehen Nach Herausbrechen des Abschnitts 140 kann an dieser Stelle die erste Leitung herausgeführt werden.

An der Vorderkante 142 des Deckels 122, die gleichzeitig die Oberkante der Frontblende 124 bildet, ist vorne links übergehend in die Frontblende 124 oben links eine öffnung 143 vorgesehen, in die ein Füllstandanzeiger 144 eingesetzt ist. Die öffnung 143 bildet an der Frontblende 124 ein Sichffenster 146, durch das ein Markierungszeiger 148 sichtbar ist.

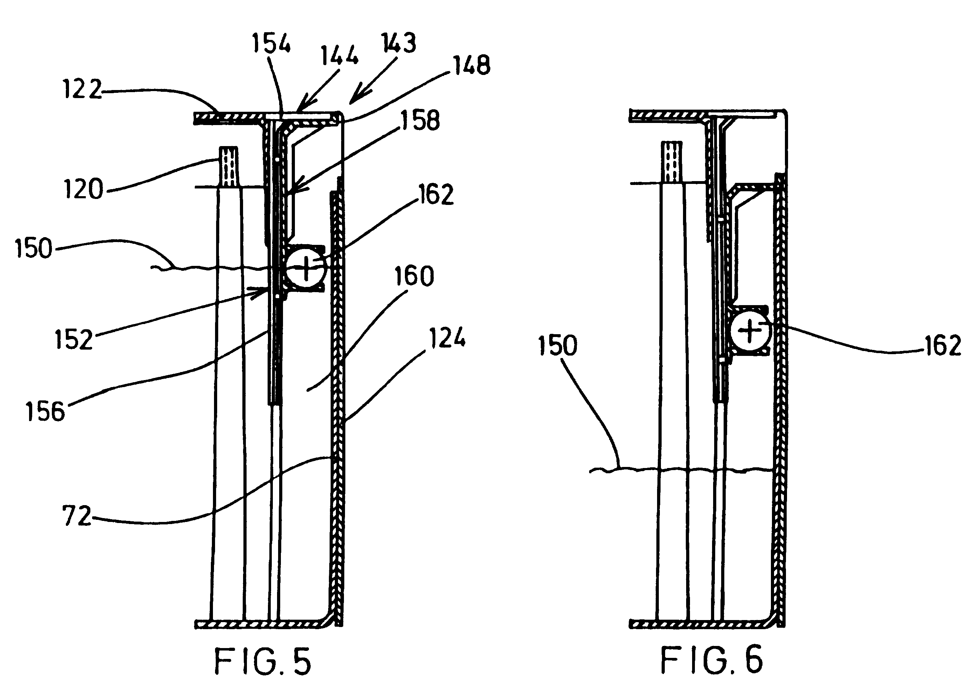

In Fig. 5 und Fig. 6 ist der Füllstandanzeiger 144 im Längsschnitt dargestellt, in Fig. 5 bei gefülltem Behältnis und in Fig. 6 bei teilweise gefülltem Behältnis, wobei der Flüssigkeitsspiegel 150 durch eine Wellenlinie dargestellt ist. Der Füllstandanzeiger 144 besitzt eine winkelförmige Halterung 152, die eine die öffnung im Deckel 122 abschließende Abdeckplatte 154 und eine von deren hinterer Kante rechtwinklig nach unten ausgehende Führungsleiste 152 für einen Schwimmkörper 158 aufweist. Der Schwimmkörper 158 gleitet in einem zwischen der Führungsleiste 152 und der Vorderwand 72 des Behältnisses 20 gebildeten schachtartigen Zwischenraum 160.

Der Schwimmkörper 158 ist im Längsschnitt etwa E-förmig ausgebildet, wobei der senkrechte Abschnitt an der Führungsleiste 152 entlang gleitet. Zwischen dem unteren und dem mittleren Schenkel des E-förmigen Schwimmkörpers 158 ist ein als Hohlkugel ausgebildeter Schwimmer 162 angeordnet, welcher den Schwimmkörper 158 anhebt, sobald der Flüssigkeitsspiegel 150 die entsprechende Höhe erreicht hat. Der obere Schenkel des E-förmigen Schwimmkörpers 158 bildet den Markierungszeiger 148, der sich im Sichtfenster 146 bewegt. In der untersten Lage des Schwimmkörpers 158 liegt der Markierungszeiger 148 auf der Vorderwand 72 des Behältnisses 20 unterhalb des Sichffensters 146 auf und ist von der etwas höher endenden Frontblende 124 verdeckt, solange der Flüssigkeitsspiegel 150 niedrig ist.

Der gesamte Füllstandanzeiger 144 kann aus dem Deckel 122 des Behältnisses 20 herausgenommen werden, so daß durch die freigegebene öffnung 143 eine Meßsonde eingeführt werden kann, um beispielsweise den pH-Wert der Flüssigkeit festzustellen.

## Patentansprüche

1. Schornsteinfuß (10) für einen Außenmantel (12) und Innenrohr (14) aufweisenden Schornstein,
wobei der Schornsteinfuß mit einer Flüssigkeitsableitung versehen ist und einen Außenmantel aus drei Mantelsteinen (21,47,49) sowie eine auf dem Mantelstein (21) seines unteren End abschnitts (18) aufliegende Abstützung (24) für das Innenrohr (14) aufweist,
wobei der untere End abschnitt (18) in seinem Innenraum (16) ein Behältnis (20) und eine seitliche Öffnung (22) zum Einbringen des Behältnisses in den Innenraum (16) aufweist,
wobei die Mantelsteine (21, 47, 49) und die Abstützung (24) miteinander durch Zuganker zu einer Einheit verbunden sind,
wobei die Abstützung (24) einen Durchlaß (28) für Flüssigkeit aufweist und eine hydrostatisch gegen den Durchtritt von Falschluft bzw. Abgas verschließbare Leitung (30) den Durchlaß (28) mit dem Behältnis (20) verbindet.

2. Schornsteinfuß nach Anspruch 1,
**dadurch gekennzeichnet,**
daß der untere Endabschnitt (18) des Schornsteinfußes (10) einen eine Kondensatpumpe aufnehmenden Sockel aufweist.

3. Schornsteinfuß nach 1 oder 2,
**dadurch gekennzeichnet,**
daß oberhalb der Abstützung (24) im Innenrohr (14) und im Außenmantel (12) eine Reinigungsöffnung (46) vorgesehen ist.

4. Schornsteinfuß nach Anspruch 3,
**dadurch gekennzeichnet,**
daß oberhalb der Reinigungsöffnung (46) im Außenmantel (12) eine Lüftungsöffnung (48) vorgesehen ist.

5. Schornsteinfuß nach Anspruch 3 oder 4,
**dadurch gekennzeichnet,**
daß die Öffnung (22), die Reinigungsöffnung (46) und gegebenenfalls die Lüftungsöffnung (48) übereinander in derselben Wand des Außenmantels (12) angeordnet und deren Umrandungen mit einer gemeinsamen Verkleidung versehen sind.

6. Schornsteinfuß nach Anspruch 1,
**dadurch gekennzeichnet,**
daß die Leitung (30) durch einen in der Leitung (30) vorgesehenen Siphon (32) verschließbar ist.

7. Schornsteinfuß einem der nach Ansprüche 1 bis 6,
**dadurch gekennzeichnet,**
daß das Behältnis (20) schubladenartig in den Innenraum (16) des unteren Endabschnitts (18) des Schornsteinfußes (10) einführbar ist.

8. Schornsteinfuß nach einem der Ansprüche 1 bis 7,
**dadurch gekennzeichnet,**
daß oben am Behältnis (20) eine Aussparung (76) für die Mündung der Leitung (30) vorgesehen ist und daß diese oberhalb eines im Behältnis (20) in horizontaler Richtung fixierten mit Neutralisationsmittel beschickbaren Aufnahmebehälters (44) mündet.

9. Schornsteinfuß nach einem der Ansprüche 1 bis 8,
**dadurch gekennzeichnet,**
daß im Deckel (122) des Behältnisses (20) eine Öffnung (143) vorgesehen ist, durch die wahlweise ein Füllstandanzeiger (144) oder eine Meßsonde eingeführt werden kann.

10. Schornsteinfuß nach einem der Ansprüche 1 bis 9,
**dadurch gekennzeichnet,**
daß ein erster Überlauf (104) an der Vorderwand (72) des Behältnisses (20) angeordnet ist.

11. Schornsteinfuß nach Anspruch 10,
**dadurch gekennzeichnet,**
daß am Behältnis (20) zusätzlich ein etwas niedriger als der erste Überlauf (104) angeordneter zweiter Überlauf (110) vorgesehen ist.

## Claims

1. Chimney base (10) with a liquid discharge for a chimney having an outer casing (12) and an inner pipe (14),
said chimney base being equipped with a liquid discharge and showing an outer casing composed of three casing blocks (21, 47, 49) as well as a support (24) for the inner pipe (14) resting on the casing block (21) of its lower end section (18),
the lower end section (18) showing a container (20) in its inner chamber (16) and a lateral aperture (22) for placing the container (20) into the inner chamber (16),
the casing blocks (21, 47, 49) and the support (24) being joined together into a unit by tie rods (52), the support (24) showing an outlet or passage (28) for liquids and a pipe (30) which can be closed against the ingress of secondary air, e.g. flue gas, connecting the passage (28) with the container (20).

2. Chimney base according to claim 1,
**characterized therein** that
the lower end section (18) of the chimney base (10) shows a base to receive a condensation pump.

3. Chimney base according to one of the claims 1 or 2,
**characterized therein** that
above the support (24) in the inner pipe (14) and in the outer casing (12) an aperture for cleaning (46) is provided for.

4. Chimney base according to claim 3,
**characterized therein** that
above the aperture for cleaning (46) in the outer casing (12) an aperture for aeration (48) is provided for.

5. Chimney base according to claim 3 or 4,
**characterized therein** that
the aperture (22), the aperture for cleaning (46) and if necessary the aperture for aeration (48) are arranged above each other in the same wall of the outer casing (12) and that their borderings are provided with one common lining.

6. Chimney base according to claim 1,
**characterized therein** that
the pipe (30) can be closed by a siphon (32) provided for in the pipe (30).

7. Chimney base according to one of the claims 1 to 6,
**characterized therein** that
the container (20) may be slid like a drawer into the inner chamber (16) of the lower end section (18) of the chimney base (10).

8. Chimney base according to one of the claims 1 to 7,
**characterized therein** that
a recess (76) is provided for on the upper part of the container (20) for the outlet of the pipe (30) and that the latter opens above a vessel (44) fitted in the container (20) in horizontal direction and which can be filled with a neutralisation product.

9. Chimney base according to one of the claims 1 to 8,
**characterized therein** that
an aperture (143) is provided for in the cover (122) of the container (20) through which, alternatively, a level indicator (144) or a measuring probe may be introduced.

10. Chimney base according to one of the claims 1 to 9,
**characterized therein** that
a first overflow (104) is arranged on the front wall (72) of the container (20).

11. Chimney base according to claim 10,
**characterized therein** that,
additionally, a second overflow (110) is provided for on the container (20) which is placed a bit lower than the first overflow (104).

## Revendications

1. Embase de cheminée (10) avec dérivation de liquides pour une cheminée présentant un manteau extérieur (12) et un tuyau intérieur (14),
l'embase de cheminée étant munie d'une dérivation de liquides et présentant un manteau extérieur constitué de trois pierres de manteau (21, 47, 49) de même qu'un support (24) pour le tuyau intérieur (14) reposant sur la pierre de manteau (21) de sa section terminale inférieure (18),
la section terminale inférieure (18) présentant dans son espace intérieur (16) un récipient (20) et une ouverture (22) pour entrer le récipient (20) dans l'espace intérieur (16),
les pierres de manteau (21, 47, 49) et le support (24) étant reliés entre eux par tirants d'ancrage (52) pour former une unité ,
le support (24) présentant un passage (28) pour les liquides et une canalisation (30) pouvant être fermée de façon hydrostatique pour empêcher l'entrée accidentelle d'air et donc de gaz d'échappement, reliant le passage (28) au récipient (20).

2. Embase de cheminée selon la revendication 1,
**caractérisée en ce que,**
la section terminale inférieure (18) de l'embase de cheminée (10) présente un socle abritant une pompe d'extraction de produits de condensation.

3. Embase de cheminée selon l'une des revendications 1 ou 2,
**caractérisée en ce que,**
au-dessus du support (24) dans le tuyau intérieur (14) et dans le manteau extérieur (12) un orifice de nettoyage (46) est prévu.

4. Embase de cheminée selon la revendication 3,
**caractérisée en ce que,**
au-dessus de l'orifice de nettoyage (46), dans le manteau extérieur (12), un orifice (48) est prévu pour l'aération.

5. Embase de cheminée selon la revendication 3 ou 4,
**caractérisée en ce que,**
l'ouverture (22), l'orifice de nettoyage (46) et le cas échéant l'orifice d'aération (48) sont disposés l'un au-dessus de l'autre dans la même paroi du manteau extérieur (12) et que leurs bords sont équipés d'un revêtement commun.

6. Embase de cheminée selon la revendication 1,
**caractérisée en ce que,**
la canalisation (30) peut être fermée par un siphon (32) prévu dans la canalisation (30).

7. Embase de cheminée selon l'une des revendications 1 à 6,
**caractérisée en ce que,**
le récipient (20) peut être introduit dans l'espace intérieur (16) de la section terminale inférieure (18) de l'embase de cheminée (10) tel un tiroir.

8. Embase de cheminée selon l'une des revendications 1 à 7,
**caractérisée en ce que,**
en haut sur le récipient (20) une échancrure (76) est prévue pour l'embouchure de la canalisation (30) et que celle-ci débouche au-dessus d'un réservoir (44) fixé dans le récipient (20) en direction horizontale et que l'on peut charger de produit de neutralisation.

9. Embase de cheminée selon l'une des revendications 1 à 8,
**caractérisée en ce que,**
dans le couvercle (122) du récipient (20) une ouverture (143) est prévue à travers laquelle, au choix, un indicateur de niveau (144) ou une tête de mesure peuvent être introduits.

10. Embase de cheminée selon l'une des revendications 1 à 9,
**caractérisé en ce que,**
un premier trop-plein (104) est placé sur la paroi frontale (72) du récipient (20).

11. Embase de cheminée selon la revendication 10,
**caractérisée en ce que,**
en plus, sur le récipient (20), un deuxième trop-plein (110) est prévu qui est placé un peu plus bas que le premier trop-plein (104).
